# EUROPEAN PATENT SPECIFICATION

(11) **EP 3 521 609 B1**
(45) Date of publication and mention of the grant of the patent: **23.12.2020**
(21) Application number: 19152216.8
(22) Date of filing: 17.01.2019
(51) Int. Cl.: F02M 61/14, F02F 7/00, F02N 15/00

(54) **FUEL SUPPLY SYSTEM FOR ENGINE, ENGINE PROVIDED THEREWITH AND METHOD OF MOUNTING AN ENGINE**
KRAFTSTOFFVERSORGUNGSSYSTEM FÜR EINEN MOTOR, DAMIT AUSGESTATTETER MOTOR UND VERFAHREN ZUR MONTAGE EINES MOTORS
SYSTÈME D'ALIMENTATION EN CARBURANT POUR MOTEUR, MOTEUR LE COMPORTANT ET PROCÉDÉ DE MONTAGE D'UN MOTEUR

(30) Priority: 02.02.2018 JP 2018016968
(43) Date of publication of application: 07.08.2019
(73) Proprietor: Mazda Motor Corporation, Aki-gun, Hiroshima 730-8670 (JP)
(72) Inventor: Hokazono, Kazuaki, Aki-gun,, Hiroshima 730-8670 (JP); Yoshida, Hiroshi, Aki-gun,, Hiroshima 730-8670 (JP); Nozaki, Osamu, Aki-gun,, Hiroshima 730-8670 (JP); Ikushima, Yusuke, Aki-gun,, Hiroshima 730-8670 (JP)
(74) Representative: Müller-Boré & Partner Patentanwälte PartG mbB

(56) References cited:
- WO-A1-2016/171211
- JP-A- 2003 161 161
- US-A- 4 955 343
- US-A- 6 076 507
- US-A1- 2002 059 019

## Description

### TECHNICAL FIELD

The present disclosure relates to a fuel supply system which supplies fuel to an engine, to an engine provided therewith and to a method of mounting an engine.

### BACKGROUND

Since damage to a fuel supply system which supplies fuel to an engine causes fuel leaks in a vehicle, the vehicle needs to be designed to fully protect the fuel supply system. In order to protect a fuel pump in a fuel supply system, JP2015-88270A proposes that a starter is disposed forward of the fuel pump. According to this proposal, upon a frontal collision of the vehicle, since an obstacle which collides with the vehicle collides with the starter, contact with the fuel pump rearward of the starter is difficult. Therefore, the risk of damage to the fuel pump is reduced.

JP2015-88270A discloses a transverse engine, and the spatial relationship between the fuel pump and the starter is effective for reduction of the risk of damage to the fuel pump. On the other hand, this technology cannot be applied as-is to a longitudinal engine.

Since a plurality of cylinders of the longitudinal engine are oriented in the front-and-rear directions of the vehicle, the side surfaces of the engine become larger in the vehicle front-and-rear directions. Unlike the transverse engine where the fuel pump is attached to a lower surface of the engine, various components of the fuel supply system, such as piping which guides fuel to the fuel pump, may be disposed in the large side surface parts of the longitudinal engine, in consideration of various design conditions.

If the fuel tank which stores the fuel to be supplied to the fuel pump is disposed in a rear part of the vehicle, it may-be possible to dispose the fuel pump in a rear part of the engine and to shorten a guide path which guides the fuel from the fuel tank to the fuel pump, in order to reduce the pressure loss in the guide path. In this case, the fuel path to the fuel pump may be comprised of a plurality of pipe members which are piped along a rear part of the engine side surface.

Similar to these pipe members, mount members for fixing the engine to a frame of the vehicle body may be coupled to the large engine side surface. As described above, if the plurality of pipe members are piped along the rear part of the engine side surface, the mount members must be attached to the engine side surface forward of the pipe members in order to avoid the pipe members.

Each mount member has a first coupling part which is coupled to the engine side surface and a second coupling part which is coupled to the vehicle frame. While the first coupling part to the engine side surface may be damaged in the frontal collision of the vehicle, the second coupling part to the vehicle body frame may be maintained even under the frontal collision. In this case, the mount member may be displaced according to deformation of the vehicle frame. Since the vehicle body frame is deformed so as to absorb the energy of frontal collision received by the vehicle, a major portion of the frame is displaced rearwardly. Here, the mount member moves rearwardly with the vehicle frame, and then collides with the piping which forms the fuel path to the fuel pump.

The piping is one of the most vulnerable parts in the fuel supply system. If the mount member collides with the piping, it may destroy the piping, resulting in a leakage of fuel from the damaged part.

JP 2003 161161 A discloses an engine provided with a belt transmission device operatively connected to a cooling fan and a timing transmission device operatively connected to a fuel injection pump.

### SUMMARY OF THE DISCLOSURE

One purpose of the present disclosure is to protect piping of a fuel supply system from a frontal collision of a vehicle.

This object is solved according to the invention by the features of the independent claims. Particular embodiments of the invention are subject of the dependent claims.

According to one aspect of the present disclosure, a fuel supply system is provided, which is configured to supply fuel to a longitudinal engine having a plurality of cylinders disposed in front-and-rear directions of a vehicle, and a side surface to which a mount member is coupled, the mount member fixing the engine to a vehicle frame, the system comprising: a fuel supply piping configured to supply fuel from a lower part of the engine to the plurality of cylinders located in an upper part of the engine, wherein the fuel supply piping is configured to be disposed at least partially rearward of a front end of an engine auxiliary machine that is disposed rearward of the mount member and that has a higher rigidity than the mount member.

Particularly, the fuel supply system can supply fuel to a longitudinal engine having a plurality of cylinders disposed in front-and-rear directions of a vehicle, and a side surface to which a mount member is coupled, the mount member fixing the engine to a vehicle frame. The system includes a guide or fuel supply piping configured to guide fuel from a lower part of the engine to the plurality of cylinders located in an upper part of the engine. The guide piping is disposed at least partially rearward of a front end of an engine auxiliary machine that is disposed rearward of the mount member and that has a higher rigidity than the mount member.

According to the above configuration, when the mount member disposed forward of the engine auxiliary machine is displaced relatively rearward of the engine upon a frontal collision of the vehicle, the front end of the engine auxiliary machine collides with the mount member. Since the engine auxiliary machine particularly has a higher rigidity than the mount member, the rearward displacement of the front end of the engine auxiliary machine is quite small. Therefore, the engine auxiliary machine can effectively prevent the rearward displacement of the mount member. Since the guide or fuel supply piping which guides or supplies fuel to the longitudinal engine is disposed at least partially rearward of the front end of the engine auxiliary machine, a coupling part coupling a first pipe member to a second pipe member does not contact the mount member that has been displaced rearwardly. That is, the guide or fuel supply piping is protected effectively from the mount member being displaced rearwardly due to the frontal collision of the vehicle.

According to the invention, the guide or fuel supply piping includes a first pipe member, a second pipe member, and a coupling part coupling the first pipe member to the second pipe member. The coupling part is disposed rearward of the front end of the engine auxiliary machine.

According to this configuration, since the coupling part coupling the first and second pipe members of the guide or fuel supply piping which guides or supplies fuel to the longitudinal engine is disposed rearward of the front end of the engine auxiliary machine, the engine auxiliary machine prevents the rearward displacement of the mount member so that the coupling part coupling the first and second pipe members does not contact the mount member being displaced rearwardly.

Particularly, the first pipe member may have a higher rigidity than the second pipe member.

According to this configuration, since the first pipe member has a higher rigidity than the second pipe member, the worker can hold the end part of the first pipe member in place, and easily couple the second pipe member to the upper end part of the first pipe member.

Further particularly, the first pipe member may comprise a metal pipe substantially extending in up-and-down directions, at a side of the engine auxiliary machine, and the second pipe member may comprise a resilient or elastic pipe coupled to an upper end of the metal pipe.

Further particularly, the fuel supply system may further include a fuel pump configured to send out the fuel supplied through the guide or fuel supply piping to fuel injection valves of the cylinders. The fuel pump may be fixed to the side surface of the engine at a position above an upper end of the mount member.

According to the above configuration, even if the mount member is displaced relatively rearwardly of the engine due to the frontal collision of the vehicle, since the fuel pump is fixed to the side surface of the engine at the position above the upper end of the mount member, the mount member is protected from colliding the fuel pump.

Further particularly, the first pipe member may be or comprise a metal pipe substantially extending in up-and-down directions, at a side of the engine auxiliary machine, and the second pipe member may be or comprise an elastic or resilient pipe coupled to an upper end of the metal pipe.

Further particularly, the second pipe member may be coupled to the upper end of the first pipe member above the engine auxiliary machine, and may be located forward of the vehicle from the front end of the engine auxiliary machine, to form a fuel path to the fuel pump.

Accordingly, since the metal pipe particularly used as the first pipe member extends in the up-and-down directions, the pipe is disposed without requiring a large space in the front-and-rear directions of the vehicle. Therefore, it becomes easy to dispose the metal pipe at the side of the engine auxiliary machine without the metal pipe protruding forward from the front end of the engine auxiliary machine. As described above, the engine auxiliary machine prevents the rearward displacement of the mount member so that the metal pipe is protected by the engine auxiliary machine.

On the other hand, since the second pipe member is to be located at least partially forward of the front end of the engine auxiliary machine, it becomes difficult to protect the second pipe member with the engine auxiliary machine compared to the first pipe member. That is, the risk of collision with the mount member is higher for the second pipe member compared to the first pipe member. However, since the second pipe member is the elastic pipe, the second pipe member can easily elastically deform and avoid receiving an excessively strong impact from the mount member.

In addition, since the second pipe member is or comprises the elastic pipe that easily deforms whereas the first pipe member is the metal pipe that hardly deforms, a worker can hold the upper end part of the first pipe member in place, and easily couple the second pipe member to the upper end part of the first pipe member. The connected part of the first pipe member to which the second pipe member is coupled is above the engine auxiliary machine, and thus the worker can couple the second pipe member to the first pipe member without being obstructed by the engine auxiliary machine.

Further particularly, the guide or fuel supply piping may extend through or be arranged in a gap formed between the engine auxiliary machine and the side surface of the engine.

Upon the collision of the vehicle, parts inside an engine bay may move toward the guide or fuel supply piping from the side of the engine auxiliary machine. According to this configuration, since the guide or fuel supply piping extends through the gap formed between the engine auxiliary machine and the side surface of the engine, the parts moving toward the guide or fuel supply piping from the side of the engine auxiliary machine will collide with the engine auxiliary machine so as not to contact the guide or fuel supply piping. Thus, the guide or fuel supply piping is also protected by the engine auxiliary machine from the parts moving toward the guide or fuel supply piping from the side of the engine auxiliary machine.

Further particularly, the guide or fuel supply piping may be disposed at least partially rearward of the front end of the engine auxiliary machine fixed to a transmission case coupled to a rear part of the engine. According to another aspect of the present disclosure, there is provided a longitudinal engine comprising: a plurality of cylinders to be disposed in front-and-rear directions of a vehicle, a side surface to which a mount member is to be coupled, the mount member being configured to fix the engine to a vehicle frame, and a fuel supply system according to the above aspect or a particular embodiment thereof, configured to supply fuel to the engine.

According to another aspect of the present disclosure, there is provided a method of mounting a longitudinal engine, in particular according to the above aspect or a particular embodiment thereof, comprising the following steps: arranging the engine having a plurality of cylinders such that the cylinders are disposed in front-and-rear directions of a vehicle; coupling a mount member to and a side surface of the engine so as to fix the engine to a vehicle frame; and disposing a fuel supply piping configured to supply fuel from a lower part of the engine to the plurality of cylinders located in an upper part of the engine at least partially rearward of a front end of an engine auxiliary machine that is disposed rearward of the mount member and that has a higher rigidity than the mount member.

The transmission case generally has a high rigidity. According to this configuration, since the engine auxiliary machine is fixed to the transmission case coupled to the rear part of the engine, even if the mount member is displaced rearward of the engine and collides with the engine auxiliary machine, the rearward displacement of the engine auxiliary machine hardly occurs. Therefore, the engine auxiliary machine can prevent the rearward displacement of the mount member collaborating with the transmission case. Since the engine auxiliary machine prevents the rearward displacement of the mount member, the coupling part coupling the first and second pipe members does not contact the mount member being displaced rearwardly. That is, the coupling part coupling the first and second pipe members is effectively protected by the engine auxiliary machine from the mount member being displaced rearwardly due to the frontal collision of the vehicle.

### BRIEF DESCRIPTION OF DRAWINGS

These and other objects, features and advantages of the present invention will become more apparent upon reading of the following detailed description of preferred embodiments and accompanying drawings. It should be understood that even though embodiments are separately described, single features thereof may be combined to additional embodiments.
Fig. 1 is a schematic view illustrating a fuel supply system which supplies fuel to an engine.
Fig. 2 is a perspective view schematically illustrating the engine.
Fig. 3 is a rear contour view schematically illustrating the engine.

### DETAILED DESCRIPTION OF THE DISCLOSURE

### <Engine and Peripheral Equipment>

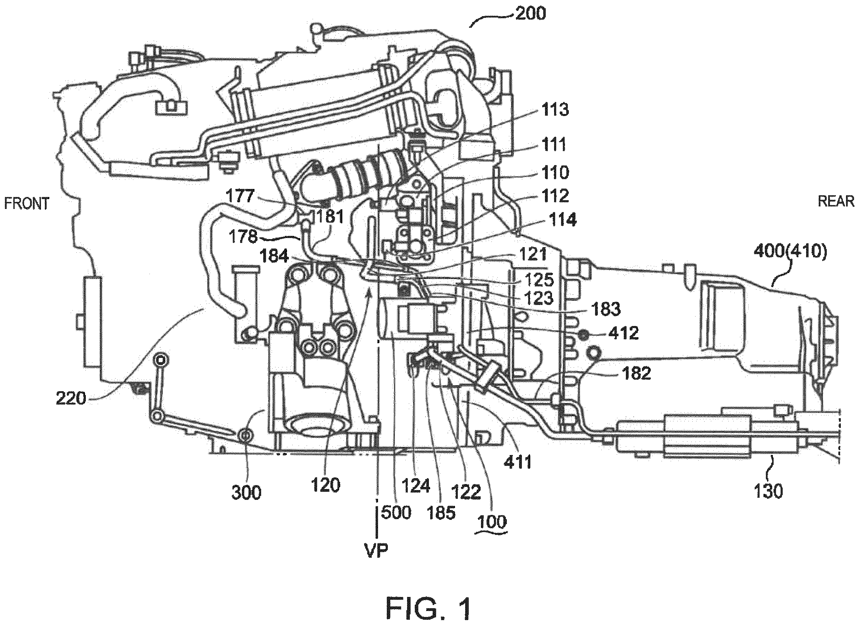

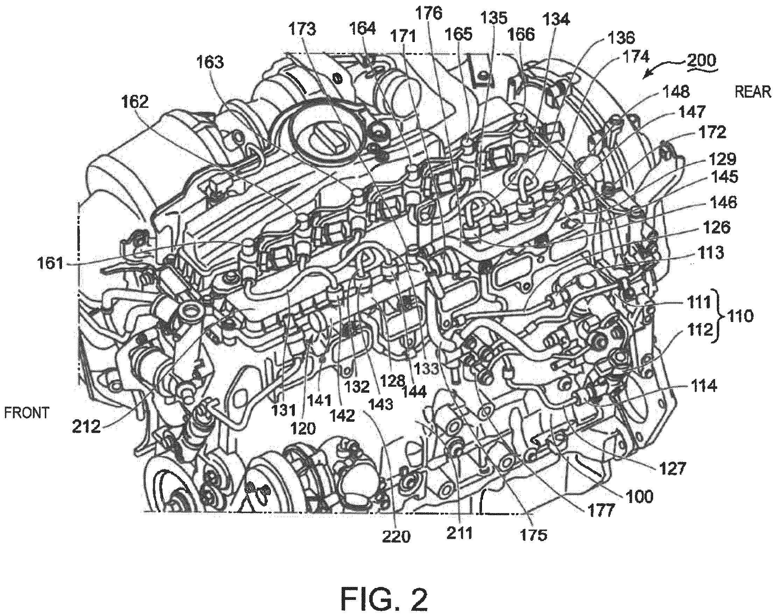

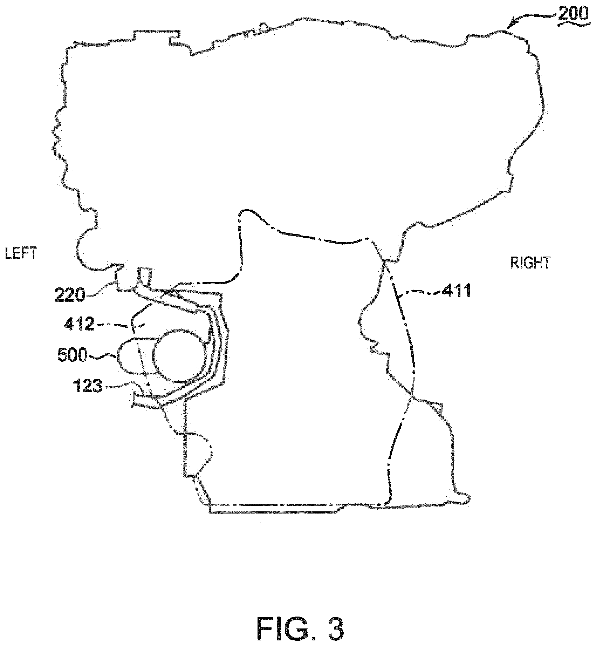

Fig. 1 is a schematic view illustrating a fuel supply system 100 which supplies fuel to an engine 200. Fig. 2 is a perspective view schematically illustrating the engine 200. Fig. 3 is a rear contour view schematically illustrating the engine 200. Before describing the fuel supply system 100, the engine 200 and peripheral equipment disposed around the engine 200 are described with reference to Figs. 1 to 3. The directional terms, such as "front," "rear," "right," "left," "up," and "down," are used based on the normal orientation of the vehicle (not illustrated). The terms, such as "upstream" and "downstream" are used based on a flow direction of fuel.

The engine 200 is of a longitudinal type. The engine 200 includes a cylinder block 211 and a cylinder head 212 (see Fig. 2). The cylinder block 211 opens upwardly, and forms a plurality of (e.g. six) cylinders (not illustrated) which substantially extend in up-and-down directions. The cylinder head 212 closes the opening ends of the six cylinders. The six cylinders substantially are lined up in front-and-rear directions.

The engine 200 further includes a plurality of (e.g. six) pistons (not illustrated) which reciprocate in the up-and-down directions inside the plural (six) cylinders, respectively, a crankshaft (not illustrated) which outputs the reciprocation of the plural (six) pistons as rotation on a given rotational axis, and coupling mechanisms (not illustrated) which couple the crankshaft to the respective pistons. The crankshaft extends in the front-and-rear directions, particularly substantially below the plural (six) pistons. The coupling mechanism may include connecting rods, piston rods, and cross-heads. Common design techniques for a vehicle engine are applicable to the structure of the engine 200. Therefore, the principle of this embodiment is not limited to the particular structure of the engine 200.

A left side surface 220 of the engine 200 is illustrated in Fig. 1. As described above, since the plural (e.g. six) cylinders extend in the up-and-down directions, the left side surface 220 can have a large dimension in the up-and-down directions. In addition, since the plural (e.g. six) cylinders of the engine 200 are lined up in the front-and-rear directions, the left side surface 220 can have a large dimension also in the front-and-rear directions. Therefore, the left side surface 220 can have a large area.

A mount member 300 coupled to the large left side surface 220 of the engine 200 is schematically illustrated in Fig. 1 as an example of one piece of peripheral equipment disposed around or on the engine 200. The mount member 300 is to be connected not only with the left side surface 220 of the engine 200 but also to a frame (not illustrated) of the vehicle. That is, the engine 200 at least partly is to be fixed to the vehicle frame through the mount member 300.

In addition to the mount member 300, Fig. 1 also schematically illustrates a transmission 400 as an example of another piece of peripheral equipment disposed around or on the engine 200. The transmission 400 includes a gear structure (not illustrated), and a transmission case 410 which encloses the gear structure so as to protect the gear structure from foreign materials. The gear structure modifies (particularly slows down) the rotation of the crankshaft of the engine 200, at a gear ratio selected by an operator who operates the vehicle, or determined under control of an ECU (Electronic Control Unit) which controls the transmission 400 to suit the operating conditions of the vehicle. As a result, the transmission 400 can output rotation with modified (particularly increased) torque. The transmission case 410 includes a coupling flange 411 to be coupled to a lower part of a rear surface of the cylinder block 211. The rigidity of the coupling flange 411 is particularly designed to be high so that the coupling flange 411, and one or more bolts (not illustrated) which penetrate the coupling flange 411 and are to be threadedly engaged with internally-threaded holes formed in the cylinder block 211, form a coupling structure for maintaining the coupling between the transmission 400 and the engine 200 particularly also under the vibration from the engine 200 and the transmission 400.

Fig. 3 illustrates a contour of the coupling flange 411 by a one-dot chain line and a contour of the engine 200 by a solid line. As illustrated in Fig. 3, the left side surface 220 of the engine 200 forms a space which is dented to the right. In the space dented to the right, a projected part 412 which projects to the left from the left side surface 220 of the engine 200 is formed as a part of the coupling flange 411. The projected part 412 is located rearward of the mount member 300 (see Fig. 1).

A starter 500 fixed to the projected part 412 is illustrated as another piece of peripheral equipment disposed around the engine 200 in Figs. 1 and 3. The starter 500 particularly functions as or embodies an engine auxiliary machine which rotates the crankshaft of the engine 200 to a given engine speed at a startup of the engine 200.

The starter 500 is to be attached to (particularly a front surface of) the projected part 412 disposed rearward of the mount member 300, and/or projects toward the mount member 300 from the projected part 412. That is, the starter 500 is to be fixed to the coupling flange 411 rearward of the mount member 300. As illustrated in Fig. 3, since a major part of the starter 500 is accommodated in the dented space formed by curving the left side surface 220 of the engine 200 to the right, the starter 500 hardly projects to the left from the outermost surface of the engine 200. The starter 500 is fixed to the coupling flange 411 so that an arcuate gap is formed between the starter 500 and the left side surface 220 of the engine 200.

The height of the starter 500 particularly is substantially the same as the height of the coupling part at which the mount member 300 is coupled to the left side surface 220 of the engine 200 (see Fig. 1). The starter 500 particularly has the higher rigidity than the mount member 300. In addition to the function to rotate the crankshaft at a startup of the engine 200, the starter 500 particularly also has a function to protect the fuel supply system 100. Before describing the protecting function for the fuel supply system 100, the structure of the fuel supply system 100 is described below.

### <Structure of Fuel Supply System>

As illustrated in Fig. 1, the fuel supply system 100 includes a fuel pump part 110 to be attached to a rear part of the left side surface 220 of the engine 200 (i.e., the rear-half area of the left side surface 220), and a guide piping 120 (as a particular fuel supply piping) which guides or supplies fuel upstream and/or downstream of the fuel pump part 110 (the entire fuel feed path particularly substantially extending in the up-and-down directions around or adjacent to the fuel pump part 110). The fuel pump part 110 sucks (or is supplied with) fuel from the fuel tank (not illustrated) mounted to a rear part of the vehicle, and then sends out (or supplies) the sucked fuel to the plural (six) cylinders of the engine 200. The guide piping 120 is configured to form a fuel path from a lower part of the engine 200 to the cylinders in an upper part of the engine 200. The guide piping 120 illustrated in Fig. 1 forms a fuel path upstream of the fuel pump part 110, and/or guides or supplies fuel which flows toward the fuel pump part 110 from the fuel tank. The guide piping 120 illustrated in Fig. 2 forms a fuel path downstream of the fuel pump part 110, and guides or supplies fuel which flows toward the engine 200 from the fuel pump part 110.

As illustrated in Fig. 1, the fuel pump part 110 is to be disposed adjacent (particularly above and/or rearward) of an upper end of the mount member 300. The fuel pump part 110 is to be located above the starter 500, and is fixed to the left side surface 220 of the engine 200 so as to at least partly overlap with the starter 500 in the up-and-down directions.

The guide piping 120 which guides or supplies fuel toward the fuel pump part 110 is configured to form a fuel path substantially extending downwardly and rearwardly from the fuel pump part 110. The guide piping 120 includes two elastic or resilient pipes 121 and 122, and a metal or substantially non-resilient pipe 123 (as a particular first pipe member), which are disposed below the fuel pump 110. The elastic pipes 121 and 122 are made of elastic or resilient material, such as rubber or elastic resin. The metal or substantially non-resilient pipe 123 particularly is made of metal having a high corrosion resistance to the fuel.

The elastic pipe 121 (as a particular second pipe member) is configured to extend downwardly from the fuel pump part 110, and a part of the elastic pipe 121 is to be piped or arranged forward of the starter 500. An upstream end (i.e., a lower end) of the elastic pipe 121 is to be connected to a downstream end (i.e., an upper end) of the metal pipe 123 disposed above the starter 500. The metal pipe 123 is configured to extend substantially downwardly from the elastic pipe 121, and to pass through a gap formed between the starter 500 and the left side surface 220 of the engine 200 (see Fig. 3). That is, the metal pipe 123 is configured to extend substantially vertically, at a location laterally (e.g. rightward) of the starter 500. An upstream end (i.e., a lower end) of the metal pipe 123 is connected to a downstream end (i.e., an upper end) of the elastic pipe 122 substantially below the starter 500. The elastic pipe 122 extends downwardly and rearwardly from the metal pipe 123. An upstream end (i.e., a lower end) of the elastic pipe 122 is to be connected to a fuel filter 130 which removes foreign materials from fuel which flows toward the fuel pump part 110 from the fuel tank.

The two coupling parts, the elastic pipes 121 and 122 and the metal pipe 123, particularly form a part of the guide piping 120. These coupling parts are denoted by reference numerals "124" and "125" in Fig. 1. At the coupling part 124, a downstream end of the elastic pipe 122 is coupled to an upstream end of the metal pipe 123. At the coupling part 125, a downstream end of the metal pipe 123 is coupled to an upstream end of the elastic pipe 121. The coupling parts 124 and 125 are to be disposed rearward of a hemispherical front end of the starter 500 (Fig. 1 illustrates an imaginary vertical plane VP which contacts the front end of the starter 500). Commonly-used coupling members may be utilized for the coupling of the two pipe members, as the coupling parts 124 and 125. The principle of this embodiment is not limited to the particular coupling members used as the coupling parts 124 and 125.

As a result of coupling the elastic pipes 121 and 122 to the metal pipe 123 at the coupling parts 125 and 124, the guide piping 120 can form a fuel path from the fuel filter 130 to the fuel pump part 110. The elastic pipe 122 forms a fuel path covering a section from the fuel filter 130 to the coupling part 124. The metal pipe 123 forms a fuel path covering a section from the coupling part 124 below the starter 500 to the coupling part 125 above the starter 500. The elastic pipe 121 forms a fuel path covering a section from the coupling part 125 to the fuel pump part 110.

The fuel pump part 110 discharges fuel which has flowed in through the elastic pipe 121 divided into two paths. Fig. 2 schematically illustrates the paths of fuel discharged from the fuel pump part 110. The fuel pump part 110 and the paths of fuel discharged from the fuel pump part 110 are described below.

The fuel pump part 110 supplies fuel to plural (e.g. six) fuel injection valves 161-166 attached to the cylinder head 212 so that the injection valves inject fuel into the plural (e.g. six) cylinders formed by the cylinder block 211, respectively. The fuel injection valves 161-166 particularly are used as or form a part of the fuel supply system 100.

The fuel pump part 110 particularly includes two fuel pumps 111 and 112. The fuel pumps 111 and 112 include discharge parts 113 and 114 from which fuel is discharged, respectively. The fuel pumps 111 and 112 discharge from the discharge parts 113 and 114 the fuel supplied through the fuel paths formed by the elastic pipes 121 and 122 and the metal pipe 123 (see Fig. 1). The guide piping 120 further forms paths which guide to the plural (e.g. six) fuel injection valves 161-166 which inject the fuel discharged from the discharge parts 113 and 114 to the plural (six) cylinders of the engine 200.

The guide piping 120 includes, as pipe members forming the paths which guide fuel to the fuel injection valves 161-166, one or more (e.g. two) feed pipes 126 and 127 extending from the fuel pump part 110, one or more (e.g. two) distribution pipes 128 and 129 disposed above the fuel pump part 110, and plural (e.g. six) coupling pipes 131-136 extending between the distribution pipes 128 and 129 and the respective fuel injection valves 161-166. The feed pipes 126 and 127 particularly guide or feed the fuel which flows into the distribution pipes 128 and 129 from the fuel pumps 111 and 112, respectively. The distribution pipes 128 and 129 temporarily store fuel which has flowed in through the feed pipes 126 and 127. The coupling pipes 131, 132, and 133 guide fuel which flows into the fuel injection valves 161, 163, and 162 from the distribution pipe 128. The coupling pipes 134, 135, and 136 guide fuel which flows into the fuel injection valves 165, 164, and 166 from the distribution pipe 129.

The feed pipes 126 and 127 are configured to extend forwardly and upwardly from the discharge parts 113 and 114 of the fuel pumps 111 and 112, and/or are connected to the distribution pipes 128 and 129 extending substantially horizontally above the fuel pumps 111 and 112, respectively. The connecting position between the feed pipe 126 and the distribution pipe 128 is at an intermediate position (particularly substantially at the center) of the distribution pipe 128 in the longitudinal directions of the distribution pipe 128. The connecting position between the feed pipe 127 and the distribution pipe 129 is at an intermediate position (particularly substantially at the center) of the distribution pipe 129 in the longitudinal directions of the distribution pipe 129.

The distribution pipes 128 and 129 particularly are disposed coaxially. That is, the distribution pipes 128 and 129 are disposed in series to each other. The distribution pipe 128 is disposed forward of and/or substantially aligned with the distribution pipe 129.

The distribution pipe 128 includes a main pipe 141 and plural (e.g. three) discharge parts 142, 143, and 144. The main pipe 141 is apart where fuel sent in through the feed pipe 126 from the fuel pump 111 is stored temporarily. The discharge parts 142, 143, and 144 are parts where the fuel inside the main pipe 141 is discharged when the fuel injection valves 161, 163, and 162 are opened.

The main pipe 141 particularly is substantially cylindrical. Both ends of the main pipe 141 are closed. The feed pipe 126 is connected to a peripheral wall of the main pipe 141. The fuel pressure inside the main pipe 141 increases as the fuel pump 111 sends out the fuel through the feed pipe 126.

The discharge parts 142, 143, and 144 are parts projected upwardly from the peripheral wall of the main pipe 141. The discharge part 142 is disposed foremost among the discharge parts 142, 143, and 144. The discharge part 143 is located rearward of the discharge part 142. The discharge part 144 is located rearward of the discharge part 143. An interval between the discharge parts 142 and 143 particularly substantially equals to an interval between the discharge parts 143 and 144.

The discharge part 142 is to be coupled through the coupling pipe 131 to the fuel injection valve 161 disposed foremost among the fuel injection valves 161, 162, and 163. The discharge part 143 is to be coupled through the coupling pipe 142 to the fuel injection valve 163 disposed rearmost among the fuel injection valves 161, 162, and 163. The discharge part 144 is coupled through the coupling pipe 133 to the fuel injection valve 162 disposed between the fuel injection valves 161 and 163. The fuel injection valves 161, 162, and 163 are opened and closed at different timings under the control of the ECU.

While the fuel injection valves 161, 162, and 163 receive the supply of fuel through the distribution pipe 128, the fuel injection valves 164, 165, and 166 disposed rearward of the fuel injection valves 161, 162, and 163 receive the supply of fuel through the distribution pipe 129 extending rearward of the distribution pipe 128. The distribution pipe 129 includes, similar to the distribution pipe 128, a main pipe 145 and three discharge parts 146, 147, and 148. The main pipe 145 is a part where fuel sent in through the feed pipe 127 from the fuel pump 112 is stored temporarily. The discharge parts 146, 147, and 148 are parts where the fuel inside the main pipe 145 is discharged when the fuel injection valves 165, 164, and 166 are opened.

The shape and structure of the distribution pipe 129 particularly are substantially the same as those of the distribution pipe 128. Therefore, description about the shape and structure of the distribution pipe 128 may also be applicable to the shape and structure of the distribution pipe 129 to omit redundant description.

The feed pipe 127 which is configured to guide or feed fuel discharged from the fuel pump 112 is connected to a peripheral wall of the main pipe 145 of the distribution pipe 129. Inside the main pipe 145, the fuel sent in through the feed pipe 127 from the fuel pump 112 is stored temporarily. The fuel pressure inside the main pipe 145 increases as the fuel pump 112 sends out the fuel.

The discharge part 146 is disposed foremost among the discharge parts 146, 147, and 148. The discharge part 147 is located rearward of the discharge part 146. The discharge part 148 is located rearward of the discharge part 147.

The discharge part 146 is to be coupled through the coupling pipe 134 to the fuel injection valve 165 disposed between the fuel injection valve 164 disposed foremost among the fuel injection valves 164, 165, and 166, and the fuel injection valve 166 disposed rearmost among the fuel injection valves 164, 165, and 166. The discharge part 147 is to be coupled to the fuel injection valve 164 through the coupling pipe 135. The discharge part 148 is to be coupled to the fuel injection valve 166 through the coupling pipe 136. The fuel injection valves 164, 165, and 166 are opened and closed at different timings under the control of the ECU.

The fuel injection valves 161-166 are disposed at a given interval in the cylinder lined-up directions (i.e., in the front-and-rear directions of the vehicle). The plural (e.g. six) cylinders are formed below the fuel injection valves 161-166. The fuel injection valves 161-166 inject fuel into the cylinders formed therebelow, under the control of the ECU which controls the timings of fuel injections.

The fuel pump part 110 discharges an amount of fuel exceeding the fuel injection amount from the fuel injection valves 161-166 to set the fuel pressure inside the distribution pipes 128 and 129 at a high value. As a result, the fuel can be injected powerfully from the fuel injection valves 161-166. As a result of the amount of fuel exceeding the fuel injection amount being supplied to the distribution pipes 128 and 129 from the fuel pump part 110, the fuel pressure inside the distribution pipes 128 and 129 may exceed a given threshold (e.g., when the fuel injection amount is reduced according to a slowdown of the vehicle, the fuel amount supplied from the fuel pump part 110 to the distribution pipes 128 and 129 may become excessive). Therefore, a pressure adjusting mechanism for reducing the pressure inside the distribution pipes 128 and 129 particularly is provided to the distribution pipes 128 and 129. The pressure adjusting mechanism is described below.

The pressure adjusting mechanism of the fuel supply system 100 makes the fuel flow out of the distribution pipes 128 and 129, and guides or supplies the outflowed fuel to the fuel tank. The pressure adjusting mechanism of the fuel supply system 100 includes, as parts which makes the fuel to flow out of the distribution pipes 128 and 129, one or more (e.g. two) pressure regulating valves 171 and 172 provided corresponding to the one or more distribution pipes 128 and 129, and one or more (e.g. two) leakage parts 173 and 174 substantially projected upwardly from the peripheral wall(s) of the one or more distribution pipes 128 and 129, respectively. The pressure adjusting mechanism of the fuel supply system 100 includes, as parts which guides or supplies the outflowed fuel from the distribution pipes 128 and 129 to the fuel tank, one or more (e.g. two) pressure regulating pipes 175 and 176 extending from the leakage part(s) 173 and 174, respectively, a connecting member 177 disposed below the distribution pipe(s) 128 and 129, and/or a return pipe part 178 (see Fig. 1) which further guides or supplies downwardly the fuel which reached the connecting member 177.

The pressure regulating valve 171 is or is to be attached to a rear end of the main pipe 141 of the distribution pipe 128. The pressure regulating valve 171 particularly is a mechanical valve which communicates an interior space of the distribution pipe 128 with a fuel path formed by the leakage part 173 projected from the peripheral wall of the main pipe 141 of the distribution pipe 128 rearward of the discharge part 144, and closes the communicating part of the distribution pipe 128 and the leakage part 173, according to the fuel pressure in the distribution pipe 128. Similarly, the pressure regulating valve 172 particularly is a mechanical valve which communicates an interior space of the distribution pipe 129 with a fuel path formed by the leakage part 174 projected from the peripheral wall of the main pipe 145 of the distribution pipe 129 rearward of the discharge part 148, and closes the communicating part of the distribution pipe 129 and the leakage part 174, according to the fuel pressure in the distribution pipe 129.

When the pressure regulating valves 171 and 172 communicate the leakage parts 173 and 174 with the distribution pipes 128 and 129, the fuel leaked from the leakage parts 173 and 174 flows into the pressure regulating pipes 175 and 176. The pressure regulating pipe 175 substantially extends downwardly from the leakage part 173, and is connected to the connecting member 177. The pressure regulating pipe 176 is connected to the leakage parts 174 and 173.

The return pipe part 178 is also connected to the connecting member 177 to which the pressure regulating pipe 175 is connected. The return pipe part 178 is used in order to guide or return fuel to the fuel tank.

The return pipe part 178 includes, similar to the guide piping 120 which forms the section to supply fuel to the fuel pump part 110, one or more (e.g. two) elastic or resilient pipes 181 and 182 and a metal or substantially non-resilient pipe 183 connected with the elastic pipes 181 and 182. The elastic pipe 181 substantially extends downwardly and rearwardly from the connecting member 177. The metal pipe 183 is coupled to a lower end part of the elastic pipe 181. Fig. 1 denotes the coupling part of the elastic pipe 181 and the metal pipe 183 by a reference numeral "184." The metal pipe 183 passes through (or is to be arranged in) a gap (see Fig. 3) formed between the starter 500 and the left side surface 220 of the engine 200, and substantially extends downwardly, similar to the metal pipe 123 of the guide piping 120. The metal pipe 183 is coupled to the elastic pipe 182 substantially below the starter 500. Fig. 1 denotes the coupling part of the elastic pipe 182 and the metal pipe 183 by a reference numeral "185." The elastic pipe 182 substantially extends rearward from the coupling part 185, and guides or supplies fuel to the fuel tank. The coupling parts 184 and 185 provided to the return pipe part 178 is to be located rearward of the vertical plane VP, similar to the coupling parts 124 and 125 provided to the guide piping 120 which forms the section to supply fuel to the fuel pump part 110.

### <Operation of Fuel Supply System>

Operation of the fuel supply system 100 is described below.

As the fuel pump part 110 operates, the fuel inside the fuel tank is sucked by the fuel pump part 110, and then passes through the fuel filter 130. After the fuel filter 130 carries out a removal processing of foreign materials from the fuel, the fuel sequentially passes through the elastic pipe 122, the metal pipe 123, and the elastic pipe 121, and then reaches the fuel pump part 110.

The fuel pump part 110 discharges the fuel from the discharge part(s) 113 and 114. The fuel is guided to the distribution pipe(s) 128 and 129 by the feed pipe(s) 126 and 127 extending from the discharge part(s) 113 and 114. The fuel is then temporarily stored in the distribution pipe(s) 128 and 129. Since the fuel pump part 110 discharges a larger amount of fuel than the fuel injection amount from the fuel injection valves 161-166, the fuel pressure inside the distribution pipes 128 and 129 becomes higher.

The high-pressure fuel inside the distribution pipes 128 and 129 is injected into the plural (e.g. six) cylinders of the engine 200 when the fuel injection valves 161-166 are opened. The fuel injection valves 161-166 are opened at different timings under the control of the ECU. When the fuel injection valves 161, 162, and 163 are opened, the fuel inside the distribution pipe 128 flows into the fuel injection valves 161, 162, and 163 through the coupling pipes 131, 133, and 132, and is injected from the fuel injection valves 161, 162, and 163 into the cylinders formed in correspondence with (e.g. substantially below) the fuel injection valves 161, 162, and 163, respectively. When the fuel injection valves 164, 165, and 166 are opened, the fuel inside the distribution pipe 129 flows into the fuel injection valves 164, 165, and 166 through the coupling pipes 135, 134, and 136, and is injected from the fuel injection valves 164, 165, and 166 into the cylinders formed in correspondence with (e.g. substantially below) the fuel injection valves 164, 165, and 166.

When the fuel pressure inside the distribution pipes 128 and 129 exceeds the given (predetermined or predeterminable) threshold, the pressure regulating valves 171 and 172 are opened. When the pressure regulating valve 171 is opened, the fuel inside the distribution pipe 128 leaks from the leakage part 173, and then flows into the pressure regulating pipe 175. When the pressure regulating valve 172 is opened, the fuel inside the distribution pipe 129 leaks from the leakage part 174, and then flows into the pressure regulating pipe 176. After that, the fuel sequentially passes through the pressure regulating pipe 176 and the leakage part 173, and flows into the pressure regulating pipe 175.

The fuel which flows into the pressure regulating pipe 175 is guided by the pressure regulating pipe 175 to the connecting member 177 below the distribution pipes 128 and 129. The fuel reaching the connecting member 177 is then guided or returned by the return pipe part 178 into the fuel tank.

### <Protection to Fuel Supply System>

Among other parts in the fuel supply system 100, the coupling parts 124, 125, 184, and 185 of the guide piping 120 and the return pipe part 178 may be particularly vulnerable. However, the coupling parts 124, 125, 184, and 185 particularly are protected by the starter 500 upon the frontal collision of the vehicle. How the coupling parts 124, 125, 184, and 185 are protected by the starter 500 upon the frontal collision of the vehicle is described below.

Upon the frontal collision of the vehicle, the coupling part between the mount member 300 and the left side surface 220 of the engine 200 is released or destroyed, while the mount member 300 remains connected with the vehicle frame. In this case, since the frame is deformed while receiving the impact which the vehicle received (i.e., the rearward impact), the coupling part between the mount member 300 and the frame is displaced rearward. The rearward displacement of the coupling part between the mount member 300 and the frame results in a rearward displacement of the mount member 300.

As described above, the starter 500 particularly is disposed substantially rearward of the mount member 300. Since the starter 500 has higher rigidity than the mount member 300, the front end of the starter 500 is hardly deformed, even if the mount member 300 displaced rearward collides with the front end of the starter 500. In addition, since the starter 500 particularly is attached to the coupling flange 411 of the transmission case 410 having the particularly high rigidity, it is hardly displaced rearward. Therefore, the front end of the starter 500 is hardly displaced rearward from the vertical plane VP. Since the coupling parts 124, 125, 184, and 185 are disposed rearward of the vertical plane VP, the starter 500 can prevent the mount member 300 being displaced rearward from contacting the coupling parts 124, 125, 184, and 185.

Since the metal pipes 123 and 183 having their ends at the coupling parts 124, 125, 184, and 185 extend substantially vertically, the distance between both ends of each of the metal pipes 123 and 183 in the front-and-rear directions becomes shorter than the distance between both ends in the up-and-down directions. Since the metal pipes 123 and 183 can be disposed without needing a large space in the front-and-rear directions of the vehicle, it becomes easy to dispose the metal pipes 123 and 183 at the right side of the starter 500, without the metal pipes 123 and 183 protruding forward from the front end of the starter 500 (i.e., the vertical plane VP). That is, all the coupling parts 124,125,184, and 185 can be easily disposed rearward of the vertical plane VP.

The elastic pipes 121 and 181 substantially extend forward beyond the vertical plane VP, unlike the metal pipes 123 and 183 entirely disposed rearward of the vertical plane VP. Therefore, the elastic pipes 121 and 181 may contact the mount member 300 displaced rearward. Since the elastic pipes 121 and 181 are made of elastic or resilient material, the elastic pipes 121 and 181 can be elastically or resiliently deformed when contacting the mount member 300. Therefore, the risk of the elastic pipes 121 and 181 receiving serious damage is very low.

As described above, since the rearward displacement of the mount member 300 substantially is stopped by the starter 500, the fuel pump part 110 disposed above the starter 500 is disposed rearward of the mount member 300 but it is difficult to contact the mount member 300 displaced rearward. Therefore, the fuel pump part 110 can also be protected by the starter 500 from the mount member 300 displaced rearward.

Upon the collision of the vehicle, in addition to the mount member 300, other parts inside an engine bay (not illustrated) may move toward the fuel supply system 100. Also in this case, since the metal pipes 123 and 183 pass through or are arranged in the gap (see Fig. 3) formed between the starter 500 and the left side surface 220 of the engine 200, the starter 500 can prevent the parts moving toward the metal pipes 123 and 183 from contacting the metal pipes 123 and 183.

### <Other Advantageous Effects>

Since the metal pipes 123 and 183 have a higher rigidity than the elastic or resilient pipes 121, 122, 181, and 182, when the metal pipes 123 and 183 are to be fixed to the left side surface 220 of the engine 200, the end parts of the metal pipes 123 and 183 can also be fixed. Since the end parts of the metal pipes 123 and 183 become stationary, a worker can easily connect the elastic pipes 121, 122, 181, and 182 with the end parts of the metal pipes 123 and 183.

The elastic pipe 121 is coupled to the upper end of the metal pipe 123. As a result, the coupling part 125 of the elastic pipe 121 and the metal pipe 123 is formed near the fuel pump part 110 fixed to the left side surface 220 of the engine 200 above the starter 500. Therefore, the elastic pipe 121 may be short. As a result, the pressure loss of the fuel within the elastic pipe 121 becomes a small value.

In the above embodiment, the mount member 300 is coupled to the left side surface 220 of the engine 200. However, the mount member 300 may be coupled to a right side surface (not illustrated) of the engine 200.

In the above embodiment, the starter 500 is used as the particular engine auxiliary machine having a higher rigidity than the mount member 300. However, other various engine auxiliary machines (e.g., an inverter) having a higher rigidity than the mount member 300 may also be used for protection of the fuel supply system 100.

In the above embodiment, the metal pipe 123 pass through or are arranged in the gap (see Fig. 3) between the starter 500 and the left side surface 220 of the engine 200. However, the metal pipe may pass through or be arranged in a space on the left side of the mount member 300.

In the above embodiment, the metal pipe 123 particularly is used as the first pipe member and/or the elastic pipe 121 particularly is used as the second pipe member. However, the first pipe member may not be made of metal and the second pipe member may not be made of elastic or resilient material. In this case, the first pipe member is desirable to have a higher rigidity than the second pipe member. In order to obtain the higher rigidity than the second pipe member, a pipe member having a thickness greater than the second pipe member may be used as the first pipe member. If the first pipe member has the higher rigidity than the second pipe member, the end part of the first pipe member to be coupled to the second pipe member becomes easier to be fixed, and thereby the worker can easily couple the second pipe member to the end part of the first pipe member.

In the above embodiment, the fuel pump part 110 is to be fixed to the lateral or left side surface 220 of the engine 200. However, the fuel pump part may be fixed to other portions of the engine. For example, the fuel pump part may be attached to a rear surface of the engine. The principle of the above embodiment is not limited, depending on the location at which the fuel pump part is attached.

In the above embodiment, the fuel pump part 110 is to be fixed to the left side surface 220 of the engine 200 above the starter 500. However, the fuel pump part may be disposed below the starter 500.

In the above embodiment, the fuel pump part 110 includes the fuel pumps 111 and 112. However, the fuel pump part may be a single pump device. The principle of the above embodiment is not limited, depending on the structure of the fuel pump part.

In the above embodiment, the structure downstream of the fuel pump part 110 is described in detail. However, a design engineer can design other various structures for the fuel paths from the fuel pump part 110 to the fuel injection valves 161-166. Therefore, the principle of the above embodiment is not limited, depending on the structure downstream of the fuel pump part 110.

The principle of the above embodiment may be utilized suitably in various vehicles.

### DESCRIPTION OF REFERENCE CHARACTERS

- 100: Fuel Supply System
- 111, 112: Fuel Pump
- 120: Guide or Fuel Supply Piping
- 121: Elastic Pipe (Second Pipe Member)
- 123: Metal Pipe (First Pipe Member)
- 125: Coupling Part
- 200: Engine
- 220: Left Side Surface (Side Surface)
- 300: Mount Member
- 410: Transmission Case

## Claims

1. A longitudinal engine (200) comprising:
a plurality of cylinders to be disposed in front-and-rear directions of a vehicle,
a side surface to which a mount member (300) is to be coupled, the mount member (300) being configured to fix the engine (200) to a vehicle frame, and
a fuel supply system (100) configured to supply fuel to a longitudinal engine (200) having a plurality of cylinders disposed in front-and-rear directions of a vehicle, and a side surface to which the mount member (300) is coupled, the mount member (300) fixing the engine (200) to a vehicle frame, the system (100) comprising:
a fuel supply piping (120) configured to supply fuel from a lower part of the engine (200) to the plurality of cylinders located in an upper part of the engine (200),
wherein the fuel supply piping (120) is configured to be disposed at least partially rearward of a front end of a starter (500) that is disposed rearward of the mount member (300) and that is more rigid than the mount member (300), and
wherein the fuel supply piping (120) includes a first pipe member (123), a second pipe member (121), and a coupling part (125) coupling the first pipe member (123) to the second pipe member (121), the coupling part (125) being disposed rearward of the front end of the starter (500).

2. The longitudinal engine (200) of claim 1, wherein the first pipe member (123) is more rigid than the second pipe member (121).

3. The longitudinal engine (200) of claim 2, wherein the first pipe member (123) comprises a metal pipe (123) substantially extending in up-and-down directions, at a side of the starter (500), and the second pipe member (121) comprises a resilient pipe (121) coupled to an upper end of the metal pipe (121).

4. The longitudinal engine (200) of any one of the preceding claims, further comprising a fuel pump (111; 112) configured to send out the fuel supplied through the fuel supply piping (120) to fuel injection valves of the cylinders, the fuel pump (111; 112) being configured to be fixed to the side surface of the engine (200) at a position above an upper end of the mount member (300).

5. The longitudinal engine (200) of claim 4, wherein the second pipe member (121) is coupled to the upper end of the first pipe member (123) above the starter (500), and is located forward of the front end of the starter (500), to form a fuel path to the fuel pump (111; 112).

6. The longitudinal engine (200) of any one of the preceding claims, wherein the fuel supply piping (120) extends through a gap formed between the starter (500) and the side surface of the engine (200).

7. The longitudinal engine (200) of any one of the preceding claims, wherein the fuel supply piping (120) is disposed at least partially rearward of the front end of the starter (500) that is fixed to a transmission case coupled to a rear part of the engine (200).

8. A method of mounting a longitudinal engine (200) comprising the following steps:
arranging the engine (200) having a plurality of cylinders such that the cylinders are disposed in front-and-rear directions of a vehicle, and
coupling a mount member (300) configured to fix the engine (200) to a vehicle frame to and a side surface of the engine (200),
disposing a fuel supply piping (120) configured to supply fuel from a lower part of the engine (200) to the plurality of cylinders located in an upper part of the engine (200) at least partially rearward of a front end of a starter (500) that is disposed rearward of the mount member (300) and that is more rigid than the mount member (300),
wherein the fuel supply piping (120) includes a first pipe member (123), a second pipe member (121), and a coupling part (125) coupling the first pipe member (123) to the second pipe member (121), the coupling part (125) being disposed rearward of the front end of the starter (500).

## Patentansprüche

1. Längsmotor (200), umfassend:
eine Vielzahl von Zylindern, die in Vorwärts- und Rückwärtsrichtungen eines Fahrzeugs anzuordnen sind,
eine seitliche Oberfläche, an die ein Montageelement (300) zu koppeln ist, wobei das Montageelement (300) so ausgestaltet ist, dass es den Motor (200) an einem Fahrzeugrahmen fixiert, und
ein Kraftstoffzufuhrsystem (100), das so ausgestaltet ist, dass es einem Längsmotor (200), der eine Vielzahl von Zylindern, die in Vorwärts- und Rückwärtsrichtungen eines Fahrzeugs angeordnet sind, Kraftstoff zuführt, und eine seitliche Oberfläche aufweist, an die das Montageelement (300) gekoppelt ist, wobei das Montageelement (300) den Motor (200) an einem Fahrzeugrahmen fixiert, wobei das System (100) umfasst:
Kraftstoffzufuhrleitungen (120), die so ausgestaltet sind, dass sie Kraftstoff von einem unteren Teil des Motors (200) der Vielzahl von Zylindern zuführen, die sich in einem oberen Teil des Motors (200) befinden,
wobei die Kraftstoffzufuhrleitungen (120) so ausgestaltet sind, dass sie zumindest teilweise in Rückwärtsrichtung eines vorderen Endes eines Anlassers (500) angeordnet sind, der in Rückwärtsrichtung des Montageelements (300) angeordnet ist und der starrer als das Montageelement (300) ist, und
wobei die Kraftstoffzufuhrleitungen (120) ein erstes Leitungselement (123), ein zweites Leitungselement (121) und einen Kopplungsteil (125) umfassen, der das erste Leitungselement (123) an das zweite Leitungselement (121) koppelt, wobei der Kopplungsteil (125) in Rückwärtsrichtung des vorderen Endes des Anlassers (500) angeordnet ist.

2. Längsmotor (200) nach Anspruch 1, wobei das erste Leitungselement (123) starrer ist als das zweite Leitungselement (121).

3. Längsmotor (200) nach Anspruch 2, wobei das erste Leitungselement (123) eine Metallleitung (123) umfasst, die sich im Wesentlichen in Auf- und Abwärtsrichtungen an einer Seite des Anlassers (500) erstreckt, und das zweite Leitungselement (121) eine nachgiebige Leitung (121) umfasst, die an ein oberes Ende der Metallleitung (121) gekoppelt ist.

4. Längsmotor (200) nach einem der vorhergehenden Ansprüche, der ferner eine Kraftstoffpumpe (111; 112) umfasst, die so ausgestaltet ist, dass sie den durch die Kraftstoffzufuhrleitungen (120) zugeführten Kraftstoff an Kraftstoffeinspritzventile der Zylinder verteilt, wobei die Kraftstoffpumpe (111; 112) so ausgestaltet ist, dass sie an der seitlichen Oberfläche des Motors (200) an einer Position über einem oberen Ende des Montageelements (300) fixiert wird.

5. Längsmotor (200) nach Anspruch 4, wobei das zweite Leitungselement (121) an das obere Ende des ersten Leitungselements (123) über dem Anlasser (500) gekoppelt ist und sich in Vorwärtsrichtung des vorderen Endes des Anlassers (500) befindet, sodass ein Kraftstoffweg zu der Kraftstoffpumpe (111; 112) gebildet wird.

6. Längsmotor (200) nach einem der vorhergehenden Ansprüche, wobei die Kraftstoffzufuhrleitungen (120) sich durch eine Lücke erstrecken, die zwischen dem Anlasser (500) und der seitlichen Oberfläche des Motors (200) gebildet ist.

7. Längsmotor (200) nach einem der vorhergehenden Ansprüche, wobei die Kraftstoffzufuhrleitungen (120) zumindest teilweise in Rückwärtsrichtung des vorderen Endes des Anlassers (500) angeordnet sind, der an einem Getriebegehäuse fixiert ist, das an einen hinteren Teil des Motors (200) gekoppelt ist.

8. Verfahren zur Montage eines Längsmotors (200), das die folgenden Schritte umfasst:
Anbringen des Motors (200), der eine Vielzahl von Zylindern aufweist, sodass die Zylinder in Vorwärts- und Rückwärtsrichtungen eines Fahrzeugs angeordnet sind, und
Koppeln eines Montageelements (300), das so ausgestaltet ist, dass es den Motor (200) an einem Fahrzeugrahmen und an einer seitlichen Oberfläche des Motors (200) fixiert,
Anordnen von Kraftstoffzufuhrleitungen (120), die so ausgestaltet sind, dass sie Kraftstoff von einem unteren Teil des Motors (200) zu der Vielzahl von Zylindern zuführen, die sich in einem oberen Teil des Motors (200) zumindest teilweise in Rückwärtsrichtung eines vorderen Endes eines Anlassers (500) befinden, der in Rückwärtsrichtung des Montageelements (300) angeordnet ist und der starrer als das Montageelement (300) ist,
wobei die Kraftstoffzufuhrleitungen (120) ein erstes Leitungselement (123), ein zweites Leitungselement (121) und einen Kopplungsteil (125) umfassen, der das erste Leitungselement (123) an das zweite Leitungselement (121) koppelt, wobei der Kopplungsteil (125) in Rückwärtsrichtung des vorderen Endes des Anlassers (500) angeordnet ist.

## Revendications

1. Moteur longitudinal (200) comprenant :
une pluralité de cylindres à placer dans des directions vers l'avant et l'arrière d'un véhicule,
une surface latérale sur laquelle un élément de montage (300) doit être couplé, l'élément de montage (300) étant conçu pour fixer le moteur (200) à un châssis de véhicule, et
un système d'alimentation en carburant (100) conçu pour alimenter du carburant à un moteur longitudinal (200) ayant une pluralité de cylindres placés dans des directions vers l'avant et l'arrière d'un véhicule, et une surface latérale sur laquelle l'élément de montage (300) est couplé, l'élément de montage (300) fixant le moteur (200) à un châssis de véhicule, le système (100) comprenant :
un tuyau d'alimentation en carburant (120) conçu pour alimenter du carburant d'une partie inférieure du moteur (200) à la pluralité de cylindres situés dans une partie supérieure du moteur (200),
dans lequel le tuyau d'alimentation en carburant (120) est conçu pour être placé au moins partiellement à l'arrière d'une extrémité avant d'un démarreur (500) qui est placé à l'arrière de l'élément de montage (300) et qui est plus rigide que l'élément de montage (300), et
dans lequel le tuyau d'alimentation en carburant (120) comprend un premier élément de tuyau (123), un second élément de tuyau (121) et une partie de couplage (125) couplant le premier élément de tuyau (123) au second élément de tuyau (121), la partie de couplage (125) étant placée vers l'arrière de l'extrémité avant du démarreur (500).

2. Moteur longitudinal (200) selon la revendication 1, dans lequel le premier élément de tuyau (123) est plus rigide que le second élément de tuyau (121).

3. Moteur longitudinal (200) selon la revendication 2, dans lequel le premier élément de tuyau comprend un tuyau métallique (123) s'étendant sensiblement dans des directions vers le haut et le bas, à un côté du démarreur (500), et le second élément de tuyau (121) comprend un tuyau élastique (121) couplé à une extrémité supérieure du tuyau métallique (121).

4. Moteur longitudinal (200) selon l'une quelconque des revendications précédentes, comprenant en outre une pompe à carburant (111 ; 112) conçue pour envoyer le carburant fourni par le tuyau d'alimentation en carburant (120) aux soupapes d'injection de carburant des cylindres, la pompe à carburant (111 ; 112) étant conçue pour être fixée à la surface latérale du moteur (200) à une position au-dessus d'une extrémité supérieure de l'élément de montage (300).

5. Moteur longitudinal (200) selon la revendication 4, dans lequel le second élément de tuyau (121) est couplé à l'extrémité supérieure du premier élément de tuyau (123) au-dessus du démarreur (500) et est situé vers l'avant de l'extrémité avant du démarreur (500), pour former un trajet de carburant vers la pompe à carburant (111 ; 112).

6. Moteur longitudinal (200) selon l'une quelconque des revendications précédentes, dans lequel le tuyau d'alimentation en carburant (120) s'étend à travers un espace formé entre le démarreur (500) et la surface latérale du moteur (200).

7. Moteur longitudinal (200) selon l'une quelconque des revendications précédentes, dans lequel le tuyau d'alimentation en carburant (120) est placé au moins partiellement vers l'arrière de l'extrémité avant du démarreur (500) qui est fixé à un boîtier de transmission couplé à une partie arrière du moteur (200).

8. Procédé de montage d'un moteur longitudinal (200) comprenant les étapes suivantes :
l'agencement du moteur (200) ayant une pluralité de cylindres de sorte que les cylindres sont placés dans des directions vers l'avant et l'arrière d'un véhicule, et
le couplage d'un élément de montage (300) conçu pour fixer le moteur (200) à un châssis de véhicule et à une surface latérale du moteur (200),
le placement d'un tuyau d'alimentation en carburant (120) conçu pour alimenter du carburant d'une partie inférieure du moteur (200) à la pluralité de cylindres situés dans une partie supérieure du moteur (200) au moins partiellement vers l'arrière d'une extrémité avant d'un démarreur (500) qui est placé vers l'arrière de l'élément de montage (300) et qui est plus rigide que l'élément de montage (300),
dans lequel le tuyau d'alimentation en carburant (120) comprend un premier élément de tuyau (123), un second élément de tuyau (121) et une partie de couplage (125) couplant le premier élément de tuyau (123) au second élément de tuyau (121), la partie de couplage (125) étant placée vers l'arrière de l'extrémité avant du démarreur (500).
